# EUROPEAN PATENT SPECIFICATION

(11) **EP 1 619 916 B1**
(45) Date of publication and mention of the grant of the patent: **21.02.2007**
(21) Application number: 04425544.6
(22) Date of filing: 21.07.2004
(51) Int. Cl.: H04Q 7/38

(54) **Method and system for controlling communication resources, related communication network and computer program product**
Verfahren und Vorrichtung zur Steuerung von Kommunikationsressourcen, zugehöriges Kommunikationsnetz und Computerprodukt
Procédé et système pour contrôler des ressources de communication, réseau de communication et produit informatique correspondant

(43) Date of publication of application: 25.01.2006
(73) Proprietor: Siemens S.p.A., 20126 Milano (IT)
(72) Inventor: Fumagalli, Sergio, 20069 Vaprio D'Adda (IT); Rettore, Leonardo, 35012 Camposampietro (IT)
(74) Representative: Giustini, Delio

(56) References cited:
- US-A1- 2002 062 379
- US-A1- 2004 042 423
- US-B1- 6 466 544
- "Digital cellular telecommunications system (Phase 2+); Universal Mobile Telecommunications System (UMTS); Mobile radio interface Layer 3 specification; Core network protocols; Stage 3 (3GPP TS 24.008 version 5.10.0 Release 5); ETSI TS 124 008" ETSI STANDARDS, EUROPEAN TELECOMMUNICATIONS STANDARDS INSTITUTE, SOPHIA-ANTIPO, FR, December 2003 (2003-12), pages 1-485, XP002301954 ISSN: 0000-0001

## Description

### Field of the invention

The present invention deals with controlling resources in communication networks, such as mobile communication networks.

The invention was developed by paying specific attention to the possible application thereof in a commercial UMTS (Universal Mobile Telecommunications System) networks. Reference to this possible area of application is not however to be construed in a limiting sense of the scope of the invention.

### Description of the related art

In commercial UMTS live networks such as e.g. the H3G network currently operated by in Italy, almost all user equipments (UE) implement a so-called "always-on" attach procedure.

A user equipment/terminal being always-on means that when the equipment is switched on (even without intentionally opening a Packet Domain contest service) while performing an attach procedure both for Circuit Switched (CS) and Packed Switched (PS) service a PDP (Packet Data Protocol) context is activated with the SGSN (Serving GPRS Support Node) in order to have an IP address being assigned to the terminal. This is required in order to make the equipment/terminal reachable on the PS domain.

To that end a dedicated channel is established. Since the SGSN node is not in a position to identify when a given user equipment is just performing an initial attach procedure, the serving SGSN node sends a so-called RAB (Radio Access Bearer) assignment to the Radio Network Controller (RNC) requesting the maximum effort i.g. 384 Kbit/s.

As a consequence, any time a user equipment (UE) intended to be always-on is switched-on, the RNC assigns to the equipment resources (for instance 384 Kbit/s channel), irrespective of whether the equipment actually needs such resources.

The mode of operation described inevitably results in an appreciable waste of resources, even if the user equipment may be switched to an idle state after a given time out interval.

More to the point, the mode of operation described limits the number of attach procedures that may be handled simultaneously. Furthermore, high rate RABs require higher transmission power levels than low rate services. Additionally, they involve more resources both at the transport layer on the so-called Iub side and in terms of call processing resources at the NodeB level.

Moreover, the signal power associated with a high bit rate RAB leads to an increase of interference level in the cell, which is a key factor in any WCDMA (Wideband Code Division Multiple Access) systems.

The "always-on" mode of operation is not explicitly indicated as such in any 3GPP specifications.

However, this mode of operation is admitted as it exploits in a correct manner the other requirements set in the specifications. Specifically, the "always-on" procedure exploits the possibility of implementing the mode of operation designated "Follow on request pending": the mobile terminal requests the network not to release the connection once the attach procedure to the PS domain is terminated. This procedure is performed simultaneously with the circuit registration any time the mobile terminal is turned on. In that way, the mobile terminal is in a position to submit a request to access the packet domain, which is the domain providing the access key to the IP domain (in practice, this corresponds to providing an IP address).

All of the foregoing occurs within a single connection when the mobile terminal is turned on.

For further detail reference can be made to the 3GPP specification designated 24.008: specifically section 4.7.3.1.3 contains the details of "follow on request" procedure are given.

More generally, the attach procedures to the packet switched domain and for activating the related context are described in the 3GPP 24.008 specification. The most significant sections in that respect are Sections 4.7.2 ("GPRS Mobility Management Timers And UMTS PS Signalling Connection Control") for the packet attach procedure and Section 6.1 ("GPRS Section Management") as regards activating the context (namely the allocation of an IP address).

### Object and summary of the present invention

The present invention aims at providing an improved arrangement adapted to avoid that communication resources may be unnecessarily wasted in a communication network.

This applies primarily, but not exclusively, to the channel card resources at the NodeB level, the transport layer IuB bandwidth, the cell load at the RNC level as well as to interference phenomena likely to reduce the cell capability in a cellular communication network.

The purpose of the present invention is to provide such an improved arrangement.

According to the present invention, that object is achieved by means of a process having the features set forth in the claims that follow.

According to the present invention, that object is achieved by means of a method having the features set forth in the claims that follow. The invention also relates to a corresponding system, a related network as well as a computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

A preferred embodiment of the invention thus provides an attach procedure of a user equipment to a communication network performed by assigning a dedicated channel to the user equipment in an always-on status. A first set of resources is provided for use by the user equipment when fully communicating over the network. A second, reduced set of communication resources is also provided for use by the user equipment for registration with the communication network. The attach request sent by the user equipment for registration with the network includes an information element indicative of the respective attach request being made for registration purposes only. When the user equipment issues an attach request including the information element indicative of the attach request being made for registration purposes only, the user equipment is assigned a dedicated channel with the second, reduced set of communication resources.

When applying such a preferred embodiment of the invention to an UMTS network, any time a RRC connection request is received on the RACH (Random Access Channel) by the Radio Network Controller (RNC) coming from a user equipment (and the associated NodeB, of course), the Radio Network Controller checks the information element designated "Establishment Cause" and stores a flag indicating if the request is for registration or for Interactive/Background Packet Switched calls.

If the request is for registration, the subsequent RAB Assignment coming from the core network is traded as restricted PS rate. Otherwise, the admitted bearer will be the best effort requested.

### Brief description of the drawings

The invention will now be described, by way of example only, by referring to the annexed figures of drawing, wherein:
- figure 1 is a schematic view of a typical system architecture of an UMTS network, representative of one possible field of application of the invention, and
- figure 2 and figure 3 are two comparative flow charts representative of operation of an UMTS network in the absence and in the presence of the arrangement described herein, respectively.

### Detailed description of an exemplary embodiment of the invention

In brief, operation of the exemplary arrangement described herein is based on the concept of causing the Radio Network Controller (RNC) to restrict the Packet Switched (PS) rate to e.g. 64Kbps for the first Radio Access Bearer (RAB) establishment of a user equipment (UE) intended to be "always-on".

Specifically, the RNC acquires knowledge of the user equipment performing a registration procedure only. Preferably, this occurs as a result of the message RRCConnectionRequest on the random acces channel (RACH) containing a corresponding indication in the information element designated "Establishment Cause".

For that reason, when switched on, the user equipment is performs the registration procedure and the procedure for activating the Packet Data Protocol (PDP) context by gaining access on the Universal Terrestrial Radio Access Network (UTRAN). This occurs by using initially the Random Access Channel, namely the RACH channel and inserting the value "registration" in the information element designated "Establishment Cause" in the RRC Connection Request message.

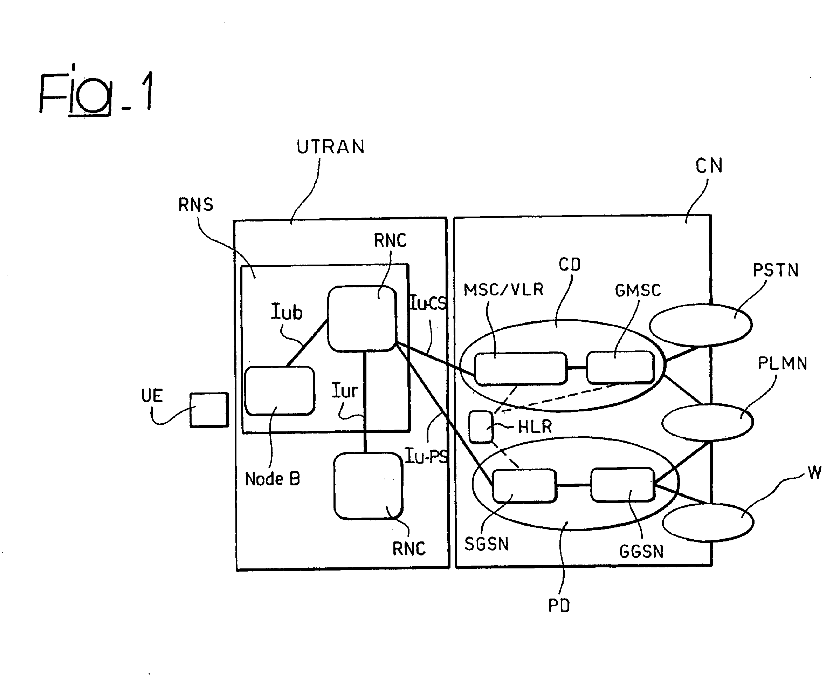

Figure 1 is a schematic diagram of a typical system architecture of a Mobile Communication Network such as a UMTS (Universal Mobile Telecommunication System) communication system. General information on the details of such a network can be gathered from the 3GPP specifications designated 3GPP TS 21.909: "Vocabulary for 3GPP specifications" and 3GPP TS 25.401 "UTRAN Overall Description".

Specifically, the two main blocks shown in figure 1 are a so-called Universal Terrestrial Radio Access Network or UTRAN adopted to provide one of a plurality of user equipments UE with access to a so-called Core Network CN. More in detail, the UTRAN plays the role of interfacing the Core Network with the UU Stratum where the user equipment UE is located.

To that end, the user equipment UE accesses a Radio Network Subsystem (RNS) comprised of a Radio Network Controller (RNC) that communicates with the user equipment UE through a module designated NodeB via an interface designated I_{ub}.

The UTRAN network comprises in fact a plurality of radio network controllers RNC, two of which are shown in the lefthand portion of figure 1. Communication between the various RNC's included in a network occurs via respective interfaces designated Iᵤᵣ.

Communication of the UTRAN network with the Core Network is via interfaces I_{u-Cs} and I_{u-PS} with the Circuit Domain and the Packet Domain, respectively.

The circuit domain is comprised of a plurality of Mobile Switching Centre/Visitor Location Register (MSC/VLR) modules having associated gateways indicated GMSC. These are comprised of Gateway Mobile Switching Centres permitting traffic exchange with the e.g. Public Switched Telephone Network (PSTN) or a Public Land Mobile Network (PLMN).

The Packed Domain is comprised of a plurality of notes designated serving GPRS Support Node (SGSNs) having associated gateway GPRS Support Node (GGSNs) permitting exchange of traffic/data with e.g. a Public Land Mobile Network (PLMN) or the Internet W.

Finally, HLR designates the Home Location Register interacting with the MSC/VLR and GMSC modules of the circuit domain CD and the SGSN modules of the Packet Domain PD.

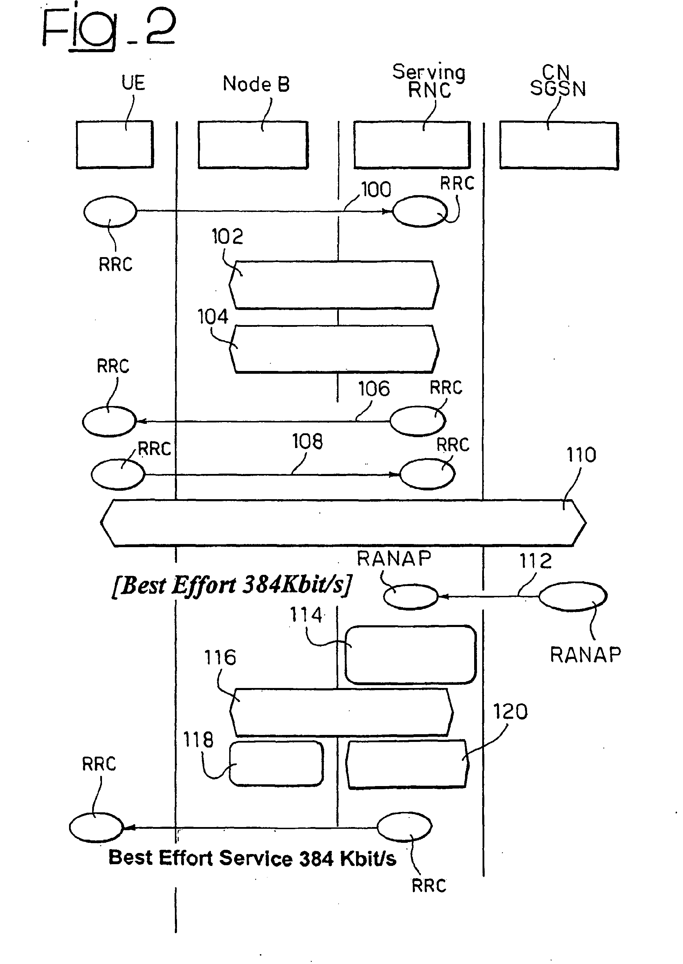

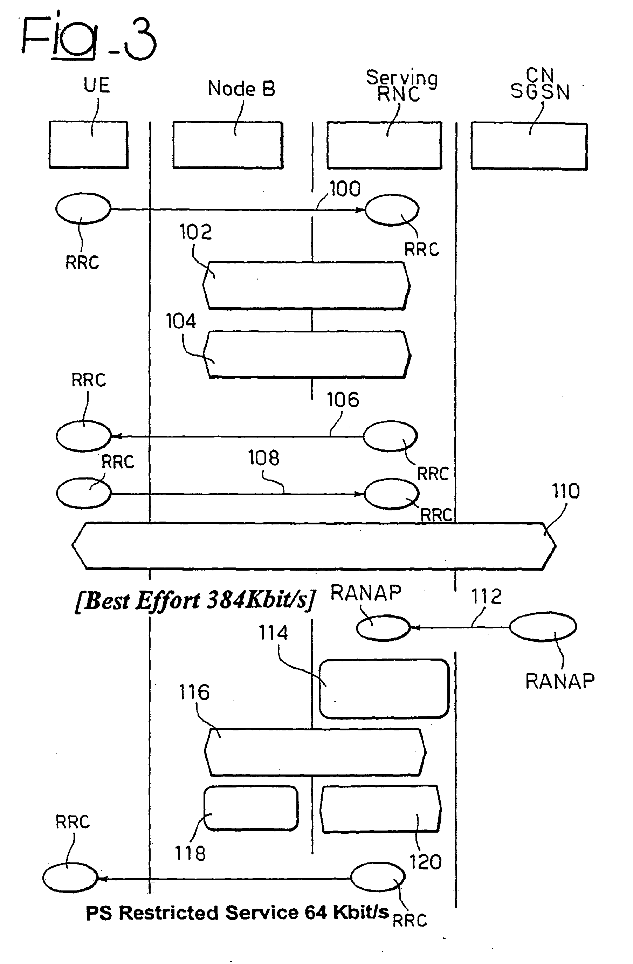

The flowcharts of figure 2 and 3 are representative of the attach procedure as performed in a standard GPP arrangement and in the arrangement described herein, respectively.

Most of the steps performed are essentially the same, the following description will apply - unless otherwise indicated - both to the diagram of figure 2 and to the diagram of figure 3.

The diagrams in question show the interactions taking place with the intervention with the user equipment UE, the NodeB, the Serving Radio Network Control (SRNC) and the Serving GPRS Support Node (SGSN) acting as the support node within the framework of the Core Network (CN).

In a step designated 100, the user equipment UE sends over the Common Control Channel (CCCH) a so-called RRC Connection Request toward the serving RNC. In that request, the information element "Establishment Cause" is set to designate "registration" as the establishment cause.

The receipt of the connection request causes (in a step 102) the establishment of the radio link by the NodeB Application Part (NBAP).

This in turn prompts in a step 104 the action currently referred to as ALCAP (Access Link Control Application Protocol) I_{ub} data transport bearer setup. This essentially corresponds to the Radio Resource Control (RRC) connection being set up on the Common Control Channel (CCCH).

This process is represented in both figures 2 and 3 as a step 106 representative of a corresponding message being sent from the serving RNC toward the user equipment.

The step 106 is followed by a further step designated 108. This corresponds to a message being sent again from the User Equipment UE toward the serving RNC indicative of the RRC Connection Set up being completed over the Dedicated Control Channel (DCCH).

The block indicated 110 designates as a whole the procedure currently designated NAS (Non-Access Stratum) Authentication Security and Service Request.

As a consequence of this procedure being completed, in a step 112 a Radio Access Bearer assignment request is sent from the SGSN module in the Core Network towards the serving RNC. Such a request involves the Radio Access Network Application Part or RANAP.

In a subsequent step 114 the serving RNC selects the Layer 1 (physical layer or L1), Layer 2 (data link layer or L2) and Iᵤ Data Transport Bearer parameters.

A further step 116 leads to the radio link reconfiguration by the NodeB Application Part or NBAP.

This, on the one hand, leads to the allocation of the radio resources (step 118) and to the definition of the Access Link Control Application Protocol (ALCAP) I_{ub} data transport (step 120).

A basic difference between the conventional arrangement shown in figure 2 and the arrangement specifically described therein lies in the criteria adopted for resource allocation.

In the traditional arrangement of figure 2, resource allocation involves the allocation of a 384 Kbit/s service (that is a first set of communication resources) and the transmission, from the serving RNC to the user equipment UE, of an RRC Radio Bearer Set up message over the dedicated control channel DCCH: this indicates that resources for a best effort service at 384 Kbit/s have been allocated.

Conversely, in the arrangement of figure 3, the resources are allocated after checking the flag "Establish Cause" inserted in the RRC connection request originally sent from the user equipment UE to the serving RNC.

In the case of the arrangement of figure 3 a specific flag has thus been stored/set by highlighting the fact that the establish cause is registration.

Once checked, if the flag is found to the set at a value indicative of the registration procedure being performed, resources are allocated in a step 118 in the form of a second, reduced set of communication resources. These are typically in the form of restricted packet switched resources, for instance resources permitting service at 64 Kbit/s.

Stated otherwise, in the case the flag checked indicates that registration is the cause for establishment of the connection, resources corresponding to a PS restricted service at 64 Kbit/s are allocated. A corresponding indication conteining the restricted rate allocated according to the teachings of the present inventions is also conveyed in the RRC Radio Bearer Setup message sent over the dedicated control channel DCCH from the serving RNC to the user equipment UE.

Conversely, if no such flag is detected, the procedure shown in figure 3 evolves exactly as shown in figure 2.

Those of skill in the art will promptly appreciate that use of the arrangement described herein is in no way limited to the specific application context specifically described herein but may in fact be applied to any communication context where similar problems and circumstances arise.

Consequently, without prejudice to the underlying principle of the invention, the details and embodiments may vary, also significantly, with respect to what has been described and shown by way of example only, without departing from the scope of the invention as defined in the claims that follow.

## Claims

1. A method of performing an attach procedure of a user equipment (UE) to a communication network (CN), wherein a dedicated channel is assigned to the user equipment (UE) in an always-on status, the method **characterized by** comprising the steps of:
- providing, for said channel, a first set of communication resources for use by said user equipment (UE) fully communicating over said network (CN) as well as a second, reduced set of communication resources for use by said user equipment (UE) for registration with said communication network (CN),
- causing the attach request sent by said user equipment (UE) for registration with said network (CN) to include an information element indicative of the respective attach request being made for registration purposes only, and
- when said user equipment (UE) issues an attach request including said information element indicative of said attach request being made for registration purposes only, assigning to said user equipment (UE) a dedicated channel with said second, reduced set of communication resources.

2. The method of claim 1, **characterised in that** said first and second set of communication resources have associated different bit rates, wherein said first set of communication resources has an associated bitrate higher than the bitrate associated with said second, reduced set of communication resources.

3. The method of claim 1, wherein said first set of communication resources has an associated bitrate of 384 Kbit/s.

4. The method of claim 1, **characterised in that** said second, reduced set of communication resources has an associated bitrate of 64Kbit/s.

5. The method of any of the previous claim, **characterised in that** said communication network (CN) is a UMTS communication network and said attach request is in the form of RRC Connection Request sent by said user equipment (UE).

6. The method of claim 5, **characterised in that** said information element is included in the "Establishment Cause" element of said RRC Connection Request.

7. The method of claim 1, **characterised in that** said attach procedure is performed via an access network including at least one random access channel (RACH) as well as a dedicated control channel (DCCH), and **in that** said attach request is sent over said random access channel, whereby said dedicated channel with either said first set or said second reduced set of radio resources is allotted as a radio access bearer (RAB) over said dedicated channel.

8. A system for performing an attach procedure of a user equipment (UE) to a communication network (CN), wherein a dedicated channel is assigned to the user equipment (UE) in an always-on status, the system **characterized by** comprising:
- means for providing for said channel, a first set of communication resources for use by said user equipment (UE) fully communicating over said network (CN) as well as a second, reduced set of communication resources for use by said user equipment (UE) for registration with said communication network (CN),
- said user equipment (UE) configured for including in the attach request sent for registration with said network (CN) an information element indicative of the respective attach request being made for registration purposes only, and
- means for assigning to said user equipment (UE) a dedicated channel with said second, reduced set of communication resources when said user equipment (UE) issues an attach request including said information element indicative of said attach request being made for registration purposes only.

9. The system of claim 8, **characterised in that** said first and second set of communication resources have associated different bitrates, wherein said first set of communication resources has an associated bitrate higher than the bitrate associated with said second, reduced set of communication resources.

10. The system of claim 8, wherein said first set of communication resources has an associated bitrate of 384 Kbit/s.

11. The system of claim 8, **characterised in that** said second, reduced set of communication resources has an associated bitrate of 64Kbit/s.

12. The system of any of the previous claim 8 to 11, **characterised in that** said communication network (CN) is a UMTS communication network and said user equipment (UE) is configured for sending said attach request in the form of RRC Connection Request.

13. The system of claim 12, **characterised in that** said information element is included in the "Establishment Cause" element of said RRC Connection Request.

14. The system of claim 8, **characterised in that** it comprises an access network including at least one random access channel (RACH) as well as a dedicated control channel (DCCH), the system being configured for sending said attach request over said random access channel, whereby said dedicated channel with either said first set or said second reduced set of radio resources is allotted as a radio access bearer (RAB) over said dedicated channel.

15. A communication network for providing communication services to user equipments (UE) adapted to perform an attach procedure to the network, wherein said user equipments are assigned dedicated channels in an always-on status, **characterised in that** it includes a system according to any of claims 8 to 14.

16. A computer program product, loadable in the memory of at least one computer and including software code portions for performing the steps of any of claims 1 to 7 when the product is run on a computer.

## Patentansprüche

1. Verfahren zur Durchführung eines Einbuchungsvorgangs eines Teilnehmergeräts (UE) in ein Kommunikationsnetz (CN), wobei ein dedizierter Kanal dem Teilnehmergerät (UE) in einem permanent verbundenen Zustand zugewiesen wird, wobei das Verfahren **dadurch gekennzeichnet ist, dass** es folgende Schritte umfasst:
- die Bereitstellung eines ersten Satzes von Kommunikationsressourcen für den genannten Kanal, zur Benutzung durch das genannte Teilnehmergerät (UE), das vollständig über das genannte Netz (CN) kommuniziert, sowie eines zweiten, reduzierten Satzes von Kommunikationsressourcen, zur Benutzung durch das genannte Teilnehmergerät (UE) für die Registrierung mit dem genannten Kommunikationsnetz (CN),
- die Bewirkung, dass die Einbuchungsaufforderung, die von dem genannten Teilnehmergerät (UE) zur Registrierung mit dem genannten Netz (CN) versendet wird, ein Informationselement enthält, welches auf die entsprechende Einbuchungsaufforderung hinweist, die ausschließlich zu Registrierungszwecken erfolgte,
- die Zuweisung eines dedizierten Kanals an das genannte Teilnehmergerät (UE) mit dem genannten zweiten, reduzierten Satz von Kommunikationsressourcen, wenn das genannte Teilnehmergerät (UE) eine Einbuchungsaufforderung ausgibt, welche das genannte Informationselement enthält, das auf die genannte Einbuchungsaufforderung hinweist, die ausschließlich zu Registrierungszwecken erfolgt.

2. Verfahren nach Anspruch 1, **dadurch gekennzeichnet, dass** dem genannten ersten und zweiten Satz von Kommunikationsressourcen verschiedene Bitraten zugeordnet sind, wobei der genannte erste Satz von Kommunikationsressourcen eine zugeordnete Bitrate besitzt, die höher ist als die Bitrate, die dem genannten zweiten, reduzierten Satz von Kommunikationsressourcen zugeordnet ist.

3. Verfahren nach Anspruch 1, wobei der genannte erste Satz von Kommunikationsressourcen eine zugeordnete Bitrate von 384 Kbit/s besitzt.

4. Verfahren nach Anspruch 1, **dadurch gekennzeichnet, dass** der genannte zweite, reduzierte Satz von Kommunikationsressourcen eine zugeordnete Bitrate von 64 Kbit/s besitzt.

5. Verfahren nach einem der vorhergehenden Ansprüche, **dadurch gekennzeichnet, dass** das genannte Kommunikationsnetz (CN) ein UMTS-Kommunikationsnetz ist, und dass die genannte Einbuchungsaufforderung die Form einer RRC Verbindungsaufforderung aufweist, die von dem genannten Teilnehmergerät (UE) gesendet wird.

6. Verfahren nach Anspruch 5, **dadurch gekennzeichnet, dass** das genannte Informationselement in dem Element "Aufbaugrund" der genannten RRC Verbindungsaufforderung enthalten ist.

7. Verfahren nach Anspruch 1, **dadurch gekennzeichnet, dass** der genannte Einbuchungsvorgang über ein Zugangsnetz erfolgt, das mindestens einen Direktzugriffskanal (RACH) sowie einen dedizierten Steuerkanal (DCCH) enthält, und dass die genannte Einbuchungsaufforderung über den genannten Direktzugriffskanal gesendet wird, wobei der genannte dedizierte Kanal entweder mit dem genannten ersten Satz oder dem genannten zweiten, reduzierten Satz von Funkressourcen als Funkzugangskanal (RAB) über den genannten dedizierten Kanal zugewiesen wird.

8. System zur Durchführung eines Einbuchungsvorgangs eines Teilnehmergeräts (UE) in ein Kommunikationsnetz (CN), wobei ein dedizierter Kanal dem Teilnehmergerät (UE) in einem permanent verbundenen Zustand zugewiesen wird, wobei das System **dadurch gekennzeichnet ist, dass** es Folgendes umfasst:
- Mittel zur Bereitstellung des genannten Kanals, einen ersten Satz von Kommunikationsressourcen zur Benutzung durch das genannte Teilnehmergerät (UE), welches vollständig über das genannte Netz (CN) kommuniziert, sowie einen zweiten, reduzierten Satz von Kommunikationsressourcen zur Benutzung durch das genannte Teilnehmergerät (UE) für die Registrierung mit dem genannten Kommunikationsnetz (CN),
- das genannte Teilnehmergerät (UE), das so konfiguriert ist, dass es in der Einbuchungsaufforderung, die zur Registrierung mit dem genannten Netz (CN) gesendet wird, ein Informationselement enthält, welches auf die entsprechende Einbuchungsaufforderung hinweist, die ausschließlich zu Registrierungszwecken erfolgt und
- Mittel zur Zuweisung eines dedizierten Kanals an das genannte Teilnehmergerät (UE) mit dem genannten zweiten, reduzierten Satz von Kommunikationsressourcen, wenn das genannte Teilnehmergerät (UE) eine Einbuchungsaufforderung ausgibt, welche das genannte Informationselement enthält, das auf die genannte Einbuchungsaufforderung hinweist, die ausschließlich zu Registrierungszwecken erfolgt.

9. System nach Anspruch 8, **dadurch gekennzeichnet, dass** dem genannten ersten und zweiten Satz von Kommunikationsressourcen verschiedene Bitraten zugeordnet sind, wobei der genannte erste Satz von Kommunikationsressourcen eine zugeordnete Bitrate besitzt, die höher ist als die Bitrate, die dem genannten zweiten, reduzierten Satz von Kommunikationsressourcen zugeordnet ist.

10. System nach Anspruch 8, wobei der genannte erste Satz von Kommunikationsressourcen eine zugeordnete Bitrate von 384 Kbit/s besitzt.

11. System nach Anspruch 8, **dadurch gekennzeichnet, dass** der genannte zweite, reduzierte Satz von Kommunikationsressourcen eine zugeordnete Bitrate von 64 Kbit/s besitzt.

12. System nach einem der vorhergehenden Ansprüche 8 bis 11, **dadurch gekennzeichnet, dass** das genannte Kommunikationsnetz (CN) ein UMTS-Kommunikationsnetz ist, und dass das genannte Teilnehmergerät (UE) so konfiguriert ist, dass es die genannte Einbuchungsaufforderung in Form einer RRC Verbindungsaufforderung sendet.

13. System nach Anspruch 12, **dadurch gekennzeichnet, dass** das genannte Informationselement in dem Element "Aufbaugrund" der genannten RRC Verbindungsaufforderung enthalten ist.

14. System nach Anspruch 8, **dadurch gekennzeichnet, dass** es ein Zugangsnetz umfasst, das mindestens einen Direktzugriffskanal (RACH) sowie einen dedizierten Steuerkanal (DCCH) enthält, wobei das System so konfiguriert ist, dass es die genannte Einbuchungsaufforderung über den genannten Direktzugriffskanal sendet, wobei der genannte dedizierte Kanal entweder mit dem genannten ersten Satz oder dem genannten zweiten, reduzierten Satz von Funkressourcen als Funkzugangskanal (RAB) über den genannten dedizierten Kanal zugewiesen wird.

15. Kommunikationsnetz zur Bereitstellung von Kommunikationsdiensten für Teilnehmergeräte (UE), die zur Durchführung eines Einbuchungsvorgangs ins Netz eingerichtet sind, wobei den genannten Teilnehmergeräten (UE) dedizierte Kanäle in einem permanent verbundenen Zustand zugeordnet sind, **dadurch gekennzeichnet, dass** darin ein System nach einem beliebigen der Ansprüche 8 bis 14 enthalten ist.

16. Computerprogrammprodukt, das in den Speicher von mindestens einem Computer geladen werden kann und Softwarecode-Anteile enthält, um die Schritte eines beliebigen der Ansprüche 1 bis 7 durchzuführen, wenn das Produkt auf einem Computer läuft.

## Revendications

1. Procédé d'exécution d'une procédure d'attachement d'un équipement utilisateur (UE) sur un réseau de communication (CN), dans lequel une voie de données dédiée est allouée à un équipement utilisateur (UE) dans un statut toujours ouvert, le procédé étant **caractérisé par** le fait de comprendre les étapes consistant à :
- fournir, pour ladite voie de données, un premier ensemble de ressources de communication pour une utilisation par ledit équipement utilisateur (UE) communiquant totalement sur ledit réseau (CN) ainsi qu'un second, ensemble réduit de ressources de communication pour une utilisation par ledit équipement utilisateur (UE) pour un enregistrement avec ledit réseau de communication (CN),
- entraîner que la demande d'attachement envoyée par ledit équipement utilisateur (UE) pour un enregistrement avec ledit réseau (CN) comprenne un élément d'information indiquant la demande d'attachement respective qui est effectuée uniquement à des fins d'enregistrement, et
- lorsque ledit équipement utilisateur (UE) délivre une demande d'attachement comprenant ledit élément d'information indiquant ladite demande d'attachement qui est effectuée uniquement à des fins d'enregistrement, assigner audit équipement utilisateur (UE) une voie de données dédiée avec ledit second, ensemble réduit de ressources de communication.

2. Procédé selon la revendication 1, **caractérisé en ce que** lesdits premier et second ensembles de ressources de communication ont associé différents débits binaires, dans lesquels ledit premier ensemble de ressources de communication a un débit binaire associé supérieur au débit binaire associé audit second, ensemble réduit de ressources de communication.

3. Procédé selon la revendication 1, dans lequel ledit premier ensemble de ressources de communication a un débit binaire associé de 384 Kbits/s.

4. Procédé selon la revendication 1, **caractérisé en ce que** ledit second, ensemble réduit de ressources de communication a un débit binaire associé de 64 Kbits/s.

5. Procédé selon l'une quelconque des revendications précédentes, **caractérisé en ce que** ledit réseau de communication (CN) est un réseau de communication UMTS et ladite demande d'attachement est sous la forme d'une demande de connexion RRC envoyée par ledit équipement utilisateur (UE).

6. Procédé selon la revendication 5, **caractérisé en ce que** ledit élément d'information est compris dans l'élément de « cause d'établissement » de ladite demande de connexion RRC.

7. Procédé selon la revendication 1, **caractérisé en ce que** ladite procédure d'attachement est exécutée via un réseau d'accès comprenant au moins une voie de données d'accès aléatoire (RACH) ainsi qu'une voie de données de contrôle dédiée (DCCH), et **en ce que** ladite demande d'attachement est envoyée sur ladite voie de données d'accès aléatoire, de telle manière que ladite voie de données dédiée avec soit ledit premier ensemble soit ledit second ensemble réduit de ressources radio soit attribué comme un support d'accès radio (RAB) sur ladite voie de données dédiée.

8. Système servant à exécuter une procédure d'attachement d'un équipement utilisateur (UE) sur un réseau de communication (CN), dans lequel une voie de données dédiée est allouée à un équipement utilisateur (UE) dans un statut toujours ouvert, le système étant **caractérisé par** le fait de comprendre :
- un moyen de fournir pour ladite voie de données, un premier ensemble de ressources de communication pour une utilisation par ledit équipement utilisateur (UE) communiquant totalement sur ledit réseau (CN) ainsi qu'un second, ensemble réduit de ressources de communication pour une utilisation par ledit équipement utilisateur (UE) pour un enregistrement avec ledit réseau de communication (CN),
- ledit équipement utilisateur (UE) configuré pour comprendre dans la demande d'attachement envoyée pour un enregistrement avec ledit réseau (CN) un élément d'information indiquant la demande d'attachement respective qui est effectuée uniquement à des fins d'enregistrement, et
- un moyen d'assigner audit équipement utilisateur (UE) une voie de données dédiée avec ledit second, ensemble réduit de ressources de communication lorsque ledit équipement utilisateur (UE) délivre une demande d'attachement comprenant ledit élément d'information indiquant ladite demande d'attachement qui est effectuée uniquement à des fins d'enregistrement.

9. Système selon la revendication 8, **caractérisé en ce que** lesdits premier et second ensembles de ressources de communication ont associé différents débits binaires, dans lesquels ledit premier ensemble de ressources de communication a un débit binaire associé supérieur au débit binaire associé audit second, ensemble réduit de ressources de communication.

10. Système selon la revendication 8, dans lequel ledit premier ensemble de ressources de communication a un débit binaire associé de 384 Kbits/s.

11. Système selon la revendication 8, **caractérisé en ce que** ledit second, ensemble réduit de ressources de communication a un débit binaire associé de 64 Kbits/s.

12. Système selon l'une quelconque des revendications précédentes 8 à 11, **caractérisé en ce que** ledit réseau de communication (CN) est un réseau de communication UMTS et ledit équipement utilisateur (UE) est configuré pour envoyer ladite demande d'attachement sous la forme d'une demande de connexion RRC

13. Système selon la revendication 12, **caractérisé en ce que** ledit élément d'information est compris dans l'élément de « cause d'établissement » de ladite demande de connexion RRC.

14. Système selon la revendication 8, **caractérisé en ce qu'**il comprend un réseau d'accès comprenant au moins une voie de données d'accès aléatoire (RACH) ainsi qu'une voie de données de contrôle dédiée (DCCH), le système étant configuré pour envoyer ladite demande d'attachement sur ladite voie de données d'accès aléatoire, de telle manière que ladite voie de données dédiée avec soit ledit premier ensemble soit ledit second ensemble réduit de ressources radio soit attribué comme un support d'accès radio (RAB) sur ladite voie de données dédiée.

15. Réseau de communication servant à fournir des services de communication à des équipements utilisateur (UE) adaptés pour exécuter une procédure d'attachement sur le réseau, dans lequel lesdits équipements utilisateur sont alloués à des voies de données dédiées dans un statut toujours ouvert, **caractérisé en ce qu'**il comprend un système selon l'une quelconque des revendications 8 à 14.

16. Produit de programme informatique, pouvant être chargé dans la mémoire d'au moins un ordinateur et comprenant des parties de code de logiciel servant à exécuter les étapes selon l'une quelconque des revendications 1 à 7 lorsque le produit est exécuté sur un ordinateur.
